(19) Europäisches Patentamt
European Patent Office
Office européen des brevets

(11) **EP 2 209 199 A1**

(12) **EUROPÄISCHE PATENTANMELDUNG**

(43) Veröffentlichungstag:
**21.07.2010 Patentblatt 2010/29**

(51) Int Cl.:
*H02M 7/537* *(2006.01)*     *H02M 7/797* *(2006.01)*
*H02J 3/01* *(2006.01)*

(21) Anmeldenummer: **09150938.0**

(22) Anmeldetag: **20.01.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **ABB Schweiz AG**
**5400 Baden (CH)**

(72) Erfinder:
• **Ronner, Beat**
  **CH-4464, Maisprach (CH)**
• **Thurnherr, Tobias**
  **CH-5408, Ennetbaden (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(54) **Verfahren zum Betrieb einer Umrichterschaltung sowie Vorrichtung zur Durchführung des Verfahrens**

(57) Es wird ein Verfahren zum Betrieb einer Umrichterschaltung angegeben, wobei die Umrichterschaltung eine Umrichtereinheit (2) mit einer Vielzahl an ansteuerbaren Leistungshalbleiterschaltern aufweist und über einen Transformator mit einem dreiphasigen elektrischen Wechselspannungsnetz (1) verbunden ist, bei welchem Verfahren die ansteuerbaren Leistungshalbleiterschalter mittels eines aus einem Regelsignal ($S_R$) gebildeten Ansteuersignals ($S_A$) angesteuert werden. Zur Dämpfung von Schwingungen wird ein gefilterter Netzstrom ($i_{GTP}$) durch Tiefpassfilterung eines Netzstromes ($i_G$) gebildet, eine gefilterte Transformatorinduktivitätsspannung ($u_{LTTP}$) durch Tiefpassfilterung einer aus dem Netzstrom ($i_G$) gebildeten Transformatorinduktivitätsspannung ($u_{LT}$) gebildet, eine gefilterte Netzspannung ($u_{GTP}$) durch Tiefpassfilterung einer Netzspannung ($u_G$) gebildet und das Regelsignal ($S_R$) durch Summation einer Reglerspannung ($u_R$), der gefilterten Transformatorinduktivitätsspannung ($u_{LTTP}$) und der gefilterten Netzspannung ($u_{GTP}$) gebildet, wobei die Reglerspannung ($u_R$) durch Ausregelung des gefilterten Netzstromes ($i_{GTP}$) auf einen Netzstromsollwert ($i_{Gref}$) gebildet wird. Ferner wird eine Vorrichtung zur Durchführung des Verfahrens angegeben.

Fig. 4

EP 2 209 199 A1

# Beschreibung

## Technisches Gebiet

Die Erfindung bezieht sich auf das Gebiet der Leistungselektronik. Sie geht aus von einem Verfahren zum Betrieb einer Umrichterschaltung sowie einer Vorrichtung zur Durchführung des Verfahrens gemäss dem Oberbegriff der unabhängigen Ansprüche.

## Stand der Technik

Herkömmliche Umrichterschaltungen umfassen eine Vielzahl an ansteuerbaren Leistungshalbleiterschaltern, welche in bekannter Weise zur Schaltung von mindestens zwei Schaltspannungsniveaus verschaltet sind. Typischerweise ist eine solche Umrichterschaltung mit einem elektrischen Wechselspannungsnetz verbunden, welches insbesondere dreiphasig ausgebildet ist. Solche Umrichterschaltungen werden häufig in Industrieanlagen eingesetzt, wobei die Umrichterschaltungen typischerweise über einen Transformator netzgekoppelt sind und wobei natürlich weitere Einsatzgebiete und Verwendungsmöglichkeiten, wie beispielsweise Windkraftanlagen, denkbar sind.

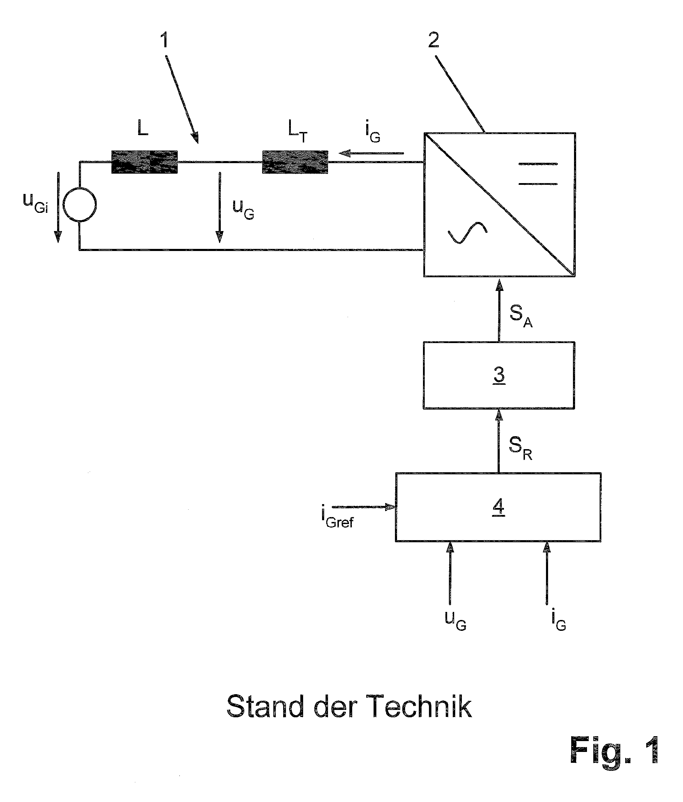

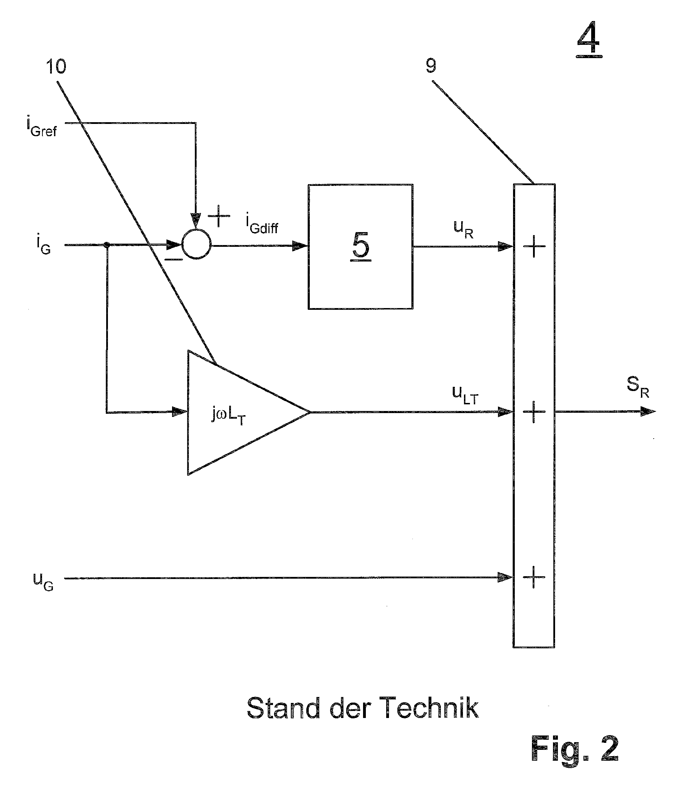

Eine Vorrichtung zum Betrieb einer eingangs erwähnten Umrichterschaltung nach dem Stand der Technik ist in Fig. 1 dargestellt. Darin weist die Umrichterschaltung eine Umrichtereinheit 2 mit einer Vielzahl an ansteuerbaren Leistungshalbleiterschaltern auf, wobei die Umrichtereinheit über einen Transformator mit einem dreiphasigen elektrischen Wechselspannungsnetz 1 verbunden ist. Es sei erwähnt, dass das dreiphasige elektrische Wechselspannungsnetz 1 mit einer dreiphasigen Netzspannung, einem dreiphasigen Netzstrom und einer dreiphasigen Transformatorinduktivitätsspannung in Fig. 1 der Übersichtlichkeit halber als einphasiges Ersatzschaltbild mit einer einphasigen Netzspannung $u_G$, einem einphasigen Netzstrom $i_G$ und einer einphasigen Transformatorinduktivitätsspannung $u_{LT}$ gezeigt ist. Gemäss Fig. 1 weist die Vorrichtung zum Betrieb der Umrichterschaltung eine der Erzeugung eines Regelsignals $S_R$ dienende Regelungsvorrichtung 4 auf, die über eine Ansteuerschaltung 3 zur Bildung eines Ansteuersignals $S_A$ mit den ansteuerbaren Leistungshalbleiterschaltern verbunden ist. Ferner ist in Fig. 2 eine Regelungsvorrichtung 4 nach dem Stand der Technik gezeigt. Gemäss Fig. 2 umfasst die Regelungsvorrichtung 4 eine Summiereinheit 9 zur Bildung des Regelsignal $S_R$ durch Summation einer Reglerspannung $u_R$, einer aus einem Netzstrom $i_G$ gebildeten Transformatorinduktivitätsspannung $u_{LT}$ und einer Netzspannung $u_G$, wobei die Transformatorinduktivitätsspannung $u_{LT}$ aus dem Netzstrom $i_G$ und einer Transformatorinduktivität $L_T$ mittels einer Berechnungseinheit 10 gebildet wird, und wobei die Regelungsvorrichtung 4 eine Reglereinheit 5 zur Bildung der Reglerspannung $u_R$ durch Ausregelung des gefilterten Netzstromes $i_G$ auf einen Netzstromsollwert $i_{Gref}$ aufweist.

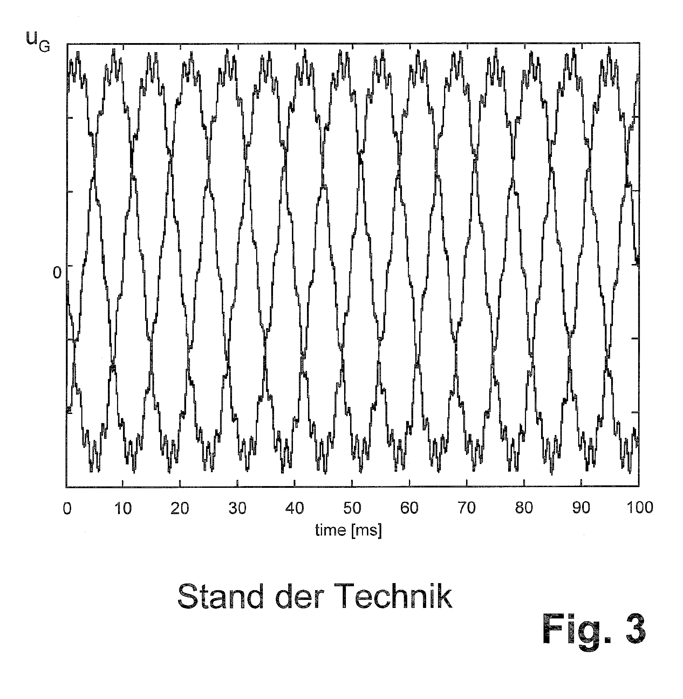

Das vorstehend genannte Vorrichtung zum Betrieb der Umrichterschaltung das diesbezügliche Verfahren erlauben es zwar den Netzstrom $i_G$ zu regeln, jedoch können in einem elektrischen Wechselspannungsnetz 1 in der Netzspannung $u_G$ Schwingungen auftreten, insbesondere harmonische Oberschwingungen bezüglich der Netzspannung $u_G$, die hochgradig unerwünscht sind und mit der vorstehend beschriebenen Vorrichtung zum Betrieb der Umrichterschaltung und dem diesbezügliche Verfahren nicht gedämpft bzw. reduziert werden können. Solche Schwingungen treten insbesondere dann auf, wenn das Netz schwach gedämpfte Resonanzstellen aufweist.In Fig. 3 ist ein solcher mit Schwingungen behafteter Verlauf der Netzspannung $u_G$ nach dem Stand der Technik gezeigt.

## Darstellung der Erfindung

Aufgabe der Erfindung ist es deshalb, ein Verfahren zum Betrieb einer Umrichterschaltung anzugeben, mittels welchem unerwünschte Schwingungen wie Oberschwingungen in der Netzspannung eines mit der Umrichterschaltung verbundenen elektrischen Wechselspannungsnetzes gedämpft bzw. reduziert werden kann. Ferner ist es die Aufgabe der Erfindung, eine Vorrichtung anzugeben, mit der das Verfahren in besonders einfacher Weise durchgeführt werden kann.

Diese Aufgaben werden durch die Merkmale des Anspruchs 1 bzw. des Anspruchs 7 gelöst. In den abhängigen Ansprüchen sind vorteilhafte Weiterbildungen der Erfindung angegeben.

Die Umrichterschaltung weist eine Umrichtereinheit mit einer Vielzahl an ansteuerbaren Leistungshalbleiterschaltern auf und ist über einen Transformator mit einem dreiphasigen elektrischen Wechselspannungsnetz verbunden. Beim erfindungsgemässen Verfahren zum Betrieb der Umrichterschaltung werden nun die ansteuerbaren Leistungshalbleiterschalter mittels eines aus einem Regelsignal gebildeten Ansteuersignals angesteuert. Erfindungsgemäss wird zunächst ein gefilterter Netzstrom durch Tiefpassfilterung eines Netzstromes, eine gefilterte Transformatorinduktivitätsspannung durch Tiefpassfilterung einer aus dem Netzstrom gebildeten Transformatorinduktivitätsspannung und eine gefilterte Netzspannung durch Tiefpassfilterung einer Netzspannung gebildet. Desweiteren wird das Regelsignal durch Summation einer Reglerspannung, der gefilterten Transformatorinduktivitätsspannung und der gefilterten Netzspannung gebildet, wobei die Reglerspannung durch Ausregelung des gefilterten Netzstromes auf einen Netzstromsollwert gebildet wird. Durch diese Massnahmen werden Schwingungen in der Netzspannung, vor allem Oberschwingungen bzgl. der Netzspannung gedämpft und damit vorteilhaft reduziert. Darüber hinaus wird die Grundfrequenz der Netzspannung mit Vorteil nicht beeinflusst. Die Addition der gefilterten Transformatorinduktivitätsspannung und der gefilterten Netzspannung zu der Reglerspannung stellt eine Vorsteuerung für die Ausregelung des gefilterten Netzstromes auf den Netzstromsollwert dar, wodurch die Regelung vorteilhaft stark entlastet werden kann.

Die erfindungsgemässe Vorrichtung zur Durchführung des Verfahrens zum Betrieb der Umrichterschaltung weist eine der Erzeugung des Regelsignals dienende Regelungsvorrichtung auf, die über eine Ansteuerschaltung zur Bildung des Ansteuersignals mit den ansteuerbaren Leistungshalbleiterschaltern verbunden ist. Nach der Erfindung weist die Regelungsvorrichtung einen ersten Tiefpassfilter zur Bildung des gefilterten Netzstromes durch Tiefpassfilterung eines Netzstromes, einen zweiten Tiefpassfilter zur Bildung der gefilterten Transformatorinduktivitätsspannung durch Tiefpassfilterung der aus dem Netzstrom gebildeten Transformatorinduktivitätsspannung und einen dritten Tiefpassfilter zur Bildung der gefilterten Netzspannung durch Tiefpassfilterung der Netzspannung auf. Zudem weist die Regelungsvorrichtung eine Summiereinheit zur Bildung des Regelsignal durch Summation der Reglerspannung, der gefilterten Transformatorinduktivitätsspannung und der gefilterten Netzspannung aufweist, wobei die Regelungsvorrichtung eine Reglereinheit zur Bildung der Reglerspannung durch Ausregelung des gefilterten Netzstromes auf den Netzstromsollwert aufweist. Die erfindungsgemässe Vorrichtung zur Durchführung des Verfahrens zum Betrieb der Umrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1     eine Ausführungsform einer Vorrichtung zur Durchführung eines Verfahrens zum Betrieb einer Umrichterschaltung nach dem Stand der Technik,

Fig. 2     eine Ausführungsform einer Regelungsvorrichtung der Vorrichtung zur Durchführung eines Verfahrens nach Fig. 1 nach dem Stand der Technik,

Fig. 3     ein gängiger zeitlicher Verlauf der Netzspannung eines dreiphasigen elektrischen Wechselspannungsnetz,

Fig. 4     eine erfindungsgemässe Ausführungsform einer Regelungsvorrichtung einer erfindungsgemässen Vorrichtung zur Durchführung eines Verfahrens zum Betrieb der Umrichterschaltung,

Fig. 5     ein zeitlicher Verlauf der Netzspannung eines dreiphasigen elektrischen Wechselspannungsnetz nach dem erfindungsgemässen Verfahren zum Betrieb der Umrichterschaltung und

Fig. 6     Bereich einer Eingangsimpedanz Z einer Umrichtereinheit der Umrichterschaltung nach dem erfindungsgemässen Verfahren zum Betrieb der Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

In Fig. 1 ist, wie eingangs bereist erwähnt, eine Ausführungsform einer Vorrichtung zur Durchführung eines Verfahrens zum Betrieb einer Umrichterschaltung nach dem Stand der Technik gezeigt. Die Umrichterschaltung weist gemäss Fig. 1 eine Umrichtereinheit 2 mit einer Vielzahl an ansteuerbaren Leistungshalbleiterschaltern auf und ist über einen Transformator mit einem dreiphasigen elektrischen Wechselspannungsnetz 1 verbunden. Es sei erwähnt, dass die Umrichtereinheit 1 allgemein als jedwede Umrichtereinheit 1 zur Schaltung von $\geq 2$ Schaltgleichspannungsniveaus (Multi-Level-Umrichterschaltung) ausgebildet sein kann. Das dreiphasige elektrische Wechselspannungsnetz 1 mit einer dreiphasigen Netzspannung, einem dreiphasigen Netzstrom und einer dreiphasigen Transformatorinduktivitätsspannung ist in Fig. 1 der Übersichtlichkeit halber als einphasiges Ersatzschaltbild mit einer einphasigen Netzspannung $u_G$, einem einphasigen Netzstrom $i_G$ und einer einphasigen Transformatorinduktivitätsspannung $u_{LT}$ gezeigt.

Beim erfindungsgemässen Verfahren zum Betrieb der Umrichterschaltung werden die ansteuerbaren Leistungshalbleiterschalter mittels eines aus einem Regelsignal $S_R$ gebildeten Ansteuersignals $S_A$ angesteuert. Erfindungsgemäss wird ein gefilterter Netzstrom $i_{GTP}$ durch Tiefpassfilterung eines Netzstromes $i_G$, eine gefilterte Transformatorinduktivitätsspannung $u_{LTTP}$ durch Tiefpassfilterung einer aus dem Netzstrom $i_G$ gebildeten Transformatorinduktivitätsspannung $u_{LT}$ und eine gefilterte Netzspannung $u_{GTP}$ durch Tiefpassfilterung einer Netzspannung $u_G$ gebildet. Das Regelsignal $S_R$ wird durch Summation einer Reglerspannung $u_R$, der gefilterten Transformatorinduktivitätsspannung $u_{LTTP}$ und der gefilterten Netzspannung $u_{GTP}$ gebildet, wobei die Reglerspannung $u_R$ durch Ausregelung des gefilterten Netzstromes $i_{GTP}$ auf einen Netzstromsollwert $i_{Gref}$ gebildet wird. Durch diese Massnahmen werden Schwingungen in der Netzspannung $u_G$, vor allem Oberschwingungen bzgl. der Netzspannung $u_G$ gedämpft und damit vorteilhaft reduziert. Ferner wird die Grundfrequenz der Netzspannung $u_G$ durch das erfindungsgemässe Verfahren vorteilhaft nicht beeinflusst. Die Addition der gefilterten Transformatorinduktivitätsspannung $u_{LTTP}$ und der gefilterten Netzspannung $u_{GTP}$ zu der Reglerspannung $u_R$ stellt eine Vorsteuerung für die Ausregelung des gefilterten Netzstromes $i_{GTP}$ auf den Netzstromsollwert $i_{Gref}$ dar, wodurch die Regelung mit Vorteil signifikant entlastet werden kann.

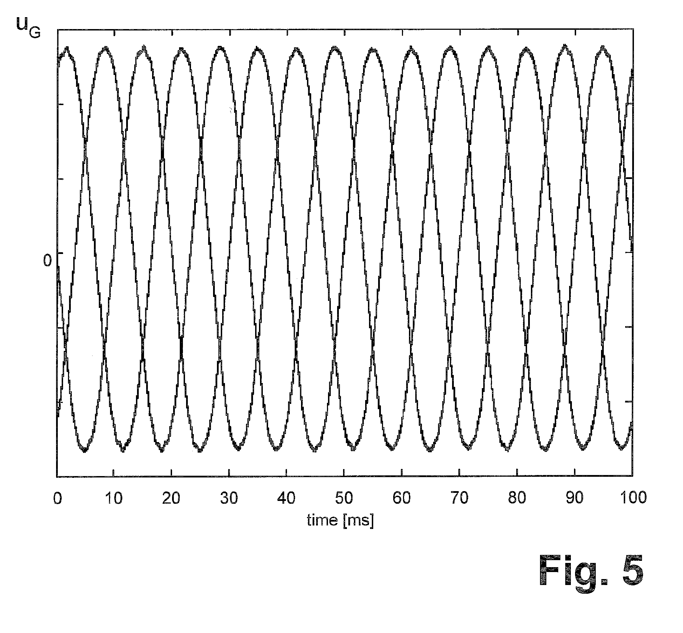

Ein zeitlicher Verlauf der Netzspannung $u_G$ des dreiphasigen elektrischen Wechselspannungsnetzes bei Einsatz des erfindungsgemässen Verfahrens zum Betrieb der Umrichterschaltung ist in Fig. 5 gezeigt, wobei eine deutliche Reduzierung bzw. Dämpfung von unerwünschten Schwingungen wie Oberschwingungen bzgl. der Netzspannung $u_G$ erkennbar ist.

Es sei an dieser Stelle ausdrücklich erwähnt, dass auch eine Tiefpassfilterung von nur einer oder zwei der vorstehend genannten zu filternden Grössen, d.h. beispielsweise eine ausschliessliche Tiefpassfilterung des Netzstromes $i_G$ oder eine ausschliessliche Tiefpassfilterung des Netzstrom $i_G$ und der Netzspannung $u_G$ denkbar wäre. Ferner wäre auch eine Band-Stop-Filterung sämtlicher der vorstehend genannten zu filternden Grössen oder eine Band-Stop-Filterung von nur einer oder zwei der vorstehend genannten zu filternden Grössen denkbar. Schliesslich wäre auch jedwede Kombination von Tiefpassfilterung und Band-Stop-Filterung sämtlicher der vorstehend genannten zu filternden Grössen oder von nur zwei der vorstehend genannten zu filternden Grössen denkbar, d.h. beispielsweise eine ausschliessliche Band-Stop-Filterung des Netzstrom $i_G$ und eine ausschliessliche Tifpassfilterung der Netzspannung $u_G$.

Vorzugsweise wird die Transformatorinduktivitätsspannung $u_{LT}$ aus dem Netzstrom $i_G$ und einer Transformatorinduktivität $L_T$ berechnet. Die Berechnung erfolgt nach folgender Formel:

$$u_{LT}=j\omega L_T \cdot i_G$$

Die Tiefpassfilterungen erfolgen jeweils mit zweiter Ordnung, wodurch vorteilhaft eine hervorragende Dämpfung und damit Reduzierung der nicht gewollten Schwingungen in der Netzspannung $u_G$ erreicht werden kann.

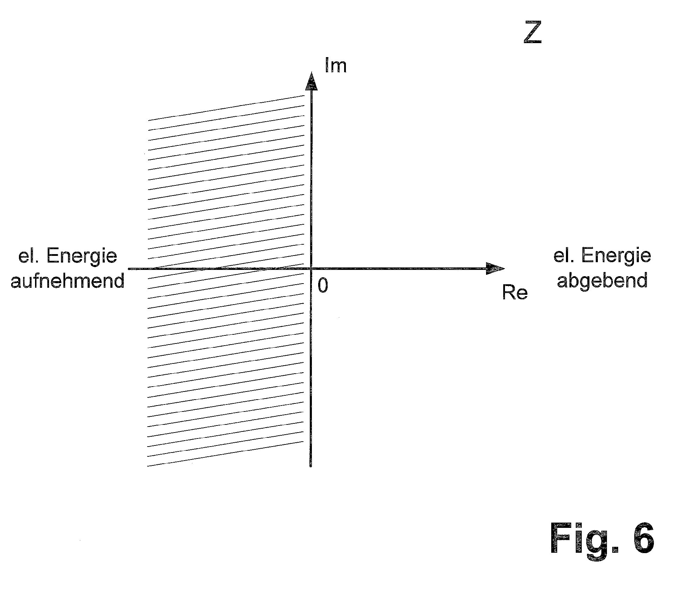

Die Übertragungsfunktionen der Tiefpassfilterungen werden vorzugsweise derart gewählt, dass die Eingangsimpedanz $Z$ der Umrichtereinheit 2 der Impedanz einer elektrischen Energie aufnehmenden elektrischen Last entspricht. Zur Veranschaulichung ist in Fig. 6 der Bereich der Eingangsimpedanz $Z$ der Umrichtereinheit 2 der Umrichterschaltung, in dem die Eingangsimpedanz $Z$ der Impedanz einer elektrischen Energie aufnehmenden elektrischen Last entspricht, schraffiert dargestellt. Mittels einer derartigen Wahl der Eingangsimpedanz $Z$ kann eine signifikante Verbesserung der Dämpfung und damit der Reduzierung der unerwünschten Schwingungen in der Netzspannung $u_G$ erzielt werden.

Die vorstehend bereits erwähnte Ausregelung des gefilterten Netzstromes $i_{GTP}$ auf den Netzstromsollwert $i_{Gref}$ erfolgt vorzugsweise nach einer Proportional-Integral-Charakteristik, da diese sich durch Einfachheit auszeichnet. Alternativ ist es aber auch denkbar, dass die Ausregelung des gefilterten Netzstromes $i_{GTP}$ auf den Netzstromsollwert $i_{Gref}$ nach einer Dead-Beat-Charakteristik mittels Iteration erfolgt. Es sei erwähnt, dass aber auch jedwede andere Regelcharakteristik denkbar wäre.

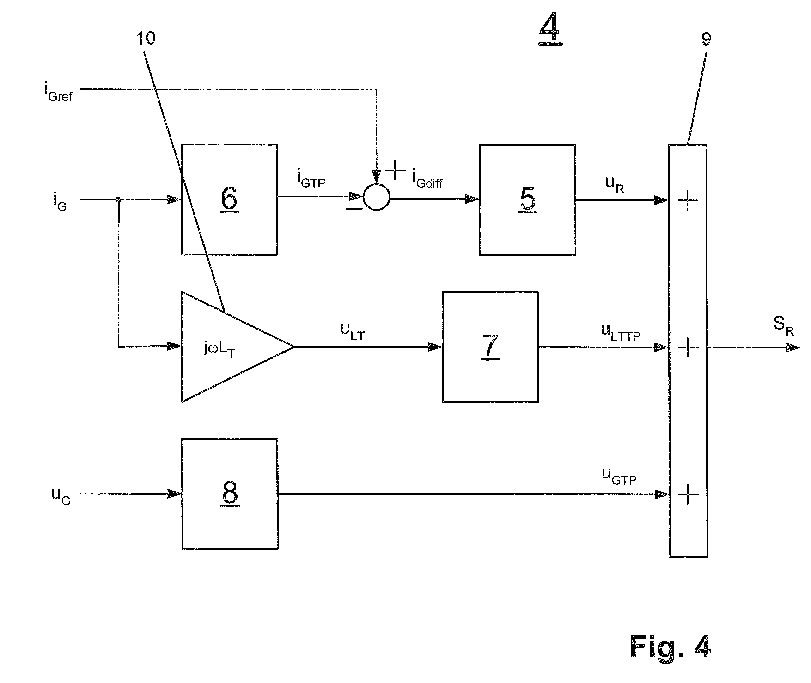

Die Vorrichtung zur Durchführung des Verfahrens weist gemäss Fig. 1 eine der Erzeugung des Regelsignals $S_R$ dienende Regelungsvorrichtung 4 auf, die über eine Ansteuerschaltung 3 zur Bildung des Ansteuersignals $S_A$ mit den ansteuerbaren Leistungshalbleiterschaltern der Umrichtereinheit verbunden ist. In Fig. 4 ist eine erfindungsgemässe Ausführungsform einer Regelungsvorrichtung 4 der erfindungsgemässen Vorrichtung zur Durchführung eines Verfahrens zum Betrieb der Umrichterschaltung gezeigt. Nach der Erfindung weist die Regelungsvorrichtung 4 gemäss Fig. 4 nun einen ersten Tiefpassfilter 6 zur Bildung des gefilterten Netzstromes $i_{GTP}$ durch Tiefpassfilterung des Netzstromes $i_G$, einen zweiten Tiefpassfilter 7 zur Bildung der gefilterten Transformatorinduktivitätsspannung $u_{LTTP}$ durch Tiefpassfilterung der aus dem Netzstrom $i_G$ gebildeten Transformatorinduktivitätsspannung ($u_{LT}$) und einen dritten Tiefpassfilter 8 zur Bildung der gefilterten Netzspannung $u_{GTP}$ durch Tiefpassfilterung der Netzspannung $u_G$ auf. Desweiteren umfasst die Regelungsvorrichtung 4 eine Summiereinheit 9 zur Bildung des Regelsignal $S_R$ durch Summation der Reglerspannung $u_R$, der gefilterten Transformatorinduktivitätsspannung $u_{LTTP}$ und der gefilterten Netzspannung $u_{GTP}$, wobei Regelungsvorrichtung 4 eine Reglereinheit 5 zur Bildung der Reglerspannung $u_R$ durch Ausregelung des gefilterten Netzstromes $i_{GTP}$ auf den Netzstromsollwert $i_{Gref}$ aufweist.

Die Regelungsvorrichtung 4 weist gemäss Fig. 4 ferner eine Berechnungseinheit 10 zur Berechnung der Transformatorinduktivitätsspannung $u_{LT}$ aus dem Netzstrom $i_G$ und einer Transformatorinduktivität $L_T$ auf, wobei die Berechnung dann nach der bereist erwähnten Formel erfolgt.

Vorzugsweise ist der erste, zweite und dritte Tiefpassfilter 6, 7, 8 jeweils ein Tiefpassfilter zweiter Ordnung, d.h. der jeweilige Tiefpassfilter 6, 7, 8 führt die Filterung der jeweiligen Grösse mit 2. Ordnung aus. Darüber hinaus sind die Übertragungsfunktionen des ersten, zweiten und dritten Tiefpassfilters 6,7, 8 derart gewählt, dass die Eingangsimpedanz Z der Umrichtereinheit 2 der Impedanz einer elektrischen Energie aufnehmenden elektrischen Last entspricht. In diesem Zusammenhang wird nochmals auf den schraffierten Bereich in Fig. 6 verwiesen, den Bereich zeigt, in dem die Eingangsimpedanz Z der Umrichtereinheit 2 der Impedanz einer elektrischen Energie aufnehmenden elektrischen Last entspricht.

Desweiteren führt die Reglereinheit 5 die Ausregelung des gefilterten Netzstromes $i_{GTP}$ auf den Netzstromsollwert $i_{Gref}$ nach einer Proportional-Integral-Charakteristik durch. Alternativ dazu ist es auch denkbar, dass die Reglereinheit 5 die Ausregelung des gefilterten Netzstromes $i_{GTP}$ auf den Netzstromsollwert $i_{Gref}$ nach einer Dead-Beat-Charakteristik mittels Iteration durchführt.

Sämtliche Schritte des erfindungsgemässen Verfahrens können als Software realisiert werden, wobei diese dann beispielsweise auf ein Computersystem, insbesondere mit einem digitalen Signalprozessor, geladen werden und darauf ablaufen können. Ferner kann die vorstehend detailliert beschriebene erfindungsgemässe Vorrichtung auch in einem Computersystem, insbesondere in einem digitalen Signalprozessor, realisiert sein.

Insgesamt konnte gezeigt werden, dass die, insbesondere in Fig. 4 gezeigte, erfindungsgemässe Vorrichtung zur Durchführung des erfindungsgemässen Verfahrens zum Betrieb der Umrichterschaltung sehr einfach und kostengünstig realisiert werden kann, da der Schaltungsaufwand äusserst gering ist und zudem nur eine geringe Anzahl an Bauelementen für den Aufbau benötigt wird. Somit ist mit dieser Vorrichtung ist das erfindungsgemässe Verfahren besonders einfach durchführbar.

**Bezugszeichenliste**

1     elektrisches Wechselspannungsnetz
2     Umrichtereinheit
3     Ansteuerschaltung
4     Regelungsvorrichtung
5     Reglereinheit
6     erster Tiefpassfilter
7     zweiter Tiefpassfilter
8     dritter Tiefpassfilter
9     Summiereinheit
10    Berechnungseinheit

**Patentansprüche**

**1.** Verfahren zum Betrieb einer Umrichterschaltung, wobei die Umrichterschaltung eine Umrichtereinheit (2) mit einer Vielzahl an ansteuerbaren Leistungshalbleiterschaltern aufweist und über einen Transformator mit einem dreiphasigen elektrischen Wechselspannungsnetz (1) verbunden ist,
bei dem die ansteuerbaren Leistungshalbleiterschalter mittels eines aus einem Regelsignal ($S_R$) gebildeten Ansteuersignals ($S_A$) angesteuert werden,
**dadurch gekennzeichnet,**
**dass** ein gefilterter Netzstrom ($i_{GTP}$) durch Tiefpassfilterung eines Netzstromes ($i_G$) gebildet wird,
dass eine gefilterte Transformatorinduktivitätsspannung ($u_{LTTP}$) durch Tiefpassfilterung einer aus dem Netzstrom ($i_G$) gebildeten Transformatorinduktivitätsspannung ($u_{LT}$) gebildet wird,
**dass** eine gefilterte Netzspannung ($u_{GTP}$) durch Tiefpassfilterung einer Netzspannung ($u_G$) gebildet wird, und
**dass** das Regelsignal ($S_R$) durch Summation einer Reglerspannung ($u_R$), der gefilterten Transformatorinduktivitätsspannung ($u_{LTTP}$) und der gefilterten Netzspannung ($u_{GTP}$) gebildet wird, wobei die Reglerspannung ($u_R$) durch Ausregelung des gefilterten Netzstromes ($i_{GTP}$) auf einen Netzstromsollwert ($i_{Gref}$) gebildet wird.

**2.** Verfahren nach Anspruch 1, **dadurch gekennzeichnet, dass** die Transformatorinduktivitätsspannung ($u_{LT}$) aus dem Netzstrom ($i_G$) und einer Transformatorinduktivität ($L_T$) berechnet wird.

**3.** Verfahren nach Anspruch 1 oder 2, **dadurch gekennzeichnet, dass** die Tiefpassfilterungen jeweils mit zweiter Ordnung erfolgen.

**4.** Verfahren nach einem der Ansprüche 1 bis 3, **dadurch gekennzeichnet, dass** die Übertragungsfunktionen der Tiefpassfilterungen derart gewählt werden, dass die Eingangsimpedanz (Z) der Umrichtereinheit (2) der Impedanz einer elektrischen Energie aufnehmenden elektrischen Last entspricht.

**5.** Verfahren nach einem der Ansprüche 1 bis 4, **dadurch gekennzeichnet, dass** die Ausregelung des gefilterten Netzstromes ($i_{GTP}$) auf den Netzstromsollwert ($i_{Gref}$) nach einer Proportional-Integral-Charakteristik erfolgt.

**6.** Verfahren nach einem der Ansprüche 1 bis 4, **dadurch gekennzeichnet, dass** die Ausregelung des gefilterten Netzstromes ($i_{GTP}$) auf den Netzstromsollwert ($i_{Gref}$) nach einer Dead-Beat-Charakteristik mittels Iteration erfolgt.

**7.** Vorrichtung zur Durchführung eines Verfahrens zum Betrieb einer Umrichterschaltung, wobei die Umrichterschaltung eine Umrichtereinheit (2) mit einer Vielzahl an ansteuerbaren Leistungshalbleiterschaltern aufweist und über einen Transformator mit einem dreiphasigen elektrischen Wechselspannungsnetz (1) verbunden ist,

mit einer der Erzeugung eines Regelsignals ($S_R$) dienenden Regelungsvorrichtung (4), die über eine Ansteuerschaltung (3) zur Bildung eines Ansteuersignals ($S_A$) mit den ansteuerbaren Leistungshalbleiterschaltern verbunden ist,

**dadurch gekennzeichnet,**

**dass** die Regelungsvorrichtung (4) einen ersten Tiefpassfilter (6) zur Bildung eines gefilterten Netzstromes ($i_{GTP}$) durch Tiefpassfilterung eines Netzstromes ($i_G$) aufweist,

**dass** die Regelungsvorrichtung (4) einen zweiten Tiefpassfilter (7) zur Bildung einer gefilterten Transformatorinduktivitätsspannung ($u_{LTTP}$) durch Tiefpassfilterung einer aus dem Netzstrom ($i_G$) gebildeten Transformatorinduktivitätsspannung ($u_{LT}$) aufweist,

**dass** die Regelungsvorrichtung (4) einen dritten Tiefpassfilter (8) zur Bildung einer gefilterten Netzspannung ($u_{GTP}$) durch Tiefpassfilterung einer Netzspannung ($u_G$) aufweist, und

**dass** die Regelungsvorrichtung (4) eine Summiereinheit (9) zur Bildung des Regelsignal ($S_R$) durch Summation einer Reglerspannung ($u_R$), der gefilterten Transformatorinduktivitätsspannung ($u_{LTTP}$) und der gefilterten Netzspannung ($u_{GTP}$) aufweist, wobei Regelungsvorrichtung (4) eine Reglereinheit (5) zur Bildung der Reglerspannung ($u_R$) durch Ausregelung des gefilterten Netzstromes ($i_{GTP}$) auf einen Netzstromsollwert ($i_{Gref}$) aufweist.

8. Vorrichtung nach Anspruch 7, **dadurch gekennzeichnet, dass** die Regelungsvorrichtung (4) eine Berechnungseinheit (10) zur Berechnung der Transformatorinduktivitätsspannung ($u_{LT}$) aus dem Netzstrom ($i_G$) und einer Transformatorinduktivität ($L_T$) aufweist.

9. Vorrichtung nach Anspruch 7 oder 8, **dadurch gekennzeichnet, dass** die der erste, zweite und dritte Tiefpassfilter (6, 7, 8) jeweils ein Tiefpassfilter zweiter Ordnung ist.

10. Vorrichtung nach einem der Ansprüche 7 bis 10, **dadurch gekennzeichnet, dass** die Übertragungsfunktionen des ersten, zweiten und dritten Tiefpassfilters (6,7, 8) derart gewählt sind, dass die Eingangsimpedanz (Z) der Umrichtereinheit (2) der Impedanz einer elektrischen Energie aufnehmenden elektrischen Last entspricht.

11. Vorrichtung nach einem der Ansprüche 1 bis 4, **dadurch gekennzeichnet, dass** die Reglereinheit (5) die Ausregelung des gefilterten Netzstromes ($i_{GTP}$) auf den Netzstromsollwert ($i_{Gref}$) nach einer Proportional-Integral-Charakteristik durchführt.

12. Vorrichtung nach einem der Ansprüche 1 bis 4, **dadurch gekennzeichnet, dass** die Reglereinheit (5) die Ausregelung des gefilterten Netzstromes ($i_{GTP}$) auf den Netzstromsollwert ($i_{Gref}$) nach einer Dead-Beat-Charakteristik mittels Iteration durchführt.

Stand der Technik

Fig. 1

$$\underline{4}$$

10

9

$i_{Gref}$

$i_G$

$+$ $i_{Gdiff}$

$\underline{5}$

$u_R$

$+$

$j\omega L_T$

$u_{LT}$

$+$

$S_R$

$u_G$

$+$

Stand der Technik

Fig. 2

Stand der Technik

Fig. 3

Fig. 4

EP 2 209 199 A1

Fig. 5

Fig. 6

Europäisches
Patentamt

European
Patent Office

Office européen
des brevets

**EUROPÄISCHER RECHERCHENBERICHT**

Nummer der Anmeldung

EP 09 15 0938

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LIU Y ET AL: "Trinary hybrid multilevel inverter used in STATCOM with unbalanced voltages" IEE PROCEEDINGS: ELECTRIC POWER APPLICATIONS, INSTITUTION OF ELECTRICAL ENGINEERS, GB, Bd. 152, Nr. 5, 9. September 2005 (2005-09-09), Seiten 1203-1222, XP006025151 ISSN: 1350-2352 * das ganze Dokument * ----- | 1-12 | INV. H02M7/537 H02M7/797 H02J3/01 |
| A | ZHU P ET AL: "Control scheme for a universal power quality manager in a two-phase synchronous rotating frame" IEE PROCEEDINGS: GENERATION, TRANSMISSION AND DISTRIBUTION, INSTITUTION OF ELECTRICAL ENGINEERS, GB, Bd. 151, Nr. 5, 15. Oktober 2004 (2004-10-15), Seiten 590-596, XP006022985 ISSN: 1350-2360 * das ganze Dokument * ----- | 1-12 | |
| | | | RECHERCHIERTE SACHGEBIETE (IPC) |
| | | | H02M H02J |
| A | PENGCHENG ZHU ET AL: "A Novel Control Scheme for a Unified Power Flow Controller" PES TD 2005/2006 MAY 21-24, 2006, PISCATAWAY, NJ, USA,IEEE, PISCATAWAY, NJ, USA, 21. Mai 2006 (2006-05-21), Seiten 684-692, XP031331127 ISBN: 978-0-7803-9194-9 * das ganze Dokument * ----- | 1-12 | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 30. Oktober 2009 | Rocha, Daniel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
      .................................................................
& : Mitglied der gleichen Patentfamilie, übereinstimmendes Dokument

EPO FORM 1503 03.82 (P04C03)

Europäisches
Patentamt
European
Patent Office
Office européen
des brevets

**EUROPÄISCHER RECHERCHENBERICHT**

Nummer der Anmeldung

EP 09 15 0938

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ZHANG YONG-GAO ET AL: "Double Closed Loop Control and Analysis for Shunt Inverter of UPFC"<br>PES TD 2005/2006 MAY 21-24, 2006, PISCATAWAY, NJ, USA,IEEE, PISCATAWAY, NJ, USA, 21. Mai 2006 (2006-05-21), Seiten 666-671, XP031331124<br>ISBN: 978-0-7803-9194-9<br>* das ganze Dokument * | 1-12 | |
| A | BOZHKO S V ET AL: "Control of Offshore DFIG-Based Wind Farm Grid With Line-Commutated HVDC Connection"<br>IEEE TRANSACTIONS ON ENERGY CONVERSION, IEEE SERVICE CENTER, PISCATAWAY, NJ, US, Bd. 22, Nr. 1, 1. März 2007 (2007-03-01), Seiten 71-78, XP011184061<br>ISSN: 0885-8969<br>* das ganze Dokument * | 1-12 | |
| A | PENGCHENG ZHU ET AL: "A Novel Control Scheme for a Unified Power Flow Controller"<br>PES TD 2005/2006 MAY 21-24, 2006, PISCATAWAY, NJ, USA,IEEE, PISCATAWAY, NJ, USA, 1. Januar 2006 (2006-01-01), Seiten 684-692, XP031101895<br>ISBN: 978-0-7803-9194-9<br>* das ganze Dokument * | 1-12 | RECHERCHIERTE SACHGEBIETE (IPC) |
| A | ZHANG YONG-GAO ET AL: "Double Closed Loop Control and Analysis for Shunt Inverter of UPFC"<br>PES TD 2005/2006 MAY 21-24, 2006, PISCATAWAY, NJ, USA,IEEE, PISCATAWAY, NJ, USA, 1. Januar 2006 (2006-01-01), Seiten 666-671, XP031101892<br>ISBN: 978-0-7803-9194-9<br>* das ganze Dokument * | 1-12 | |

Der vorliegende Recherchenbericht wurde für alle Patentansprüche erstellt

| Recherchenort | Abschlußdatum der Recherche | Prüfer |
|---|---|---|
| Den Haag | 30. Oktober 2009 | Rocha, Daniel |